# EUROPÄISCHE PATENTSCHRIFT

(11) **EP 1 902 103 B1**
(45) Veröffentlichungstag und Bekanntmachung des Hinweises auf die Patenterteilung: **07.01.2009**
(21) Anmeldenummer: 06762387.6
(22) Anmeldetag: 04.07.2006
(51) Int. Cl.: C09C 3/04, C09C 1/36, B02C 23/14, B02C 23/26, B02C 23/34

(54) **TITANDIOXIDPIGMENTHERSTELLUNG UNTER VERWENDUNG EINER LUFTWIRBELMÜHLE**
PRODUCTION OF TITANIUM DIOXIDE PIGMENTS USING AN AIR VORTEX MILL
PRODUCTION DE PIGMENTS DE DIOXYDE DE TITANE AU MOYEN D'UN MOULIN A TOURBILLON D'AIR

(30) Priorität: 09.07.2005 DE 102005032248
(43) Veröffentlichungstag der Anmeldung: 26.03.2008
(73) Patentinhaber: Tronox Pigments GmbH, 47829 Krefeld (DE)
(72) Erfinder: BAUMANN, Frank, 47802 Krefeld (DE); BRINGSKEN, Jörg, 47239 Duisburg (DE); DÖRSCHUG, Uwe, 47918 Krefeld (DE); LAUBACH, Benno, 47809 Krefeld (DE)
(74) Vertreter: Viering, Jentschura & Partner
(86) Internationale Anmeldenummer: PCT/EP2006/006496
(87) Internationale Veröffentlichungsnummer: WO 2007/006456

(56) Entgegenhaltungen:
- EP-A- 0 347 948
- EP-A1- 0 796 660
- DE-A1- 19 823 563
- DE-B- 1 164 805

## Beschreibung

Die Erfindung richtet sich auf ein Verfahren zur Herstellung eines feinteiligen, staub- oder pulverförmigen Stoffes durch Mahlung und/oder Desagglomeration eines partikelförmigen, insbesondere körnigen, und/oder agglomerierten Materials und/oder durch Mahltrocknung eines feuchten, insbesondere feinteiligen, Materials, insbesondere Filterkuchens.

Weiterhin richtet sich die Erfindung auf eine Luftwirbelmühle, umfassend einen Statorzylinder mit darin an einer hochtourig rotierbaren Achse koaxial übereinander angeordneten, jeweils Mahlstufen ausbildenden Rotorschleudertellern, vorzugsweise in Form von Schleuderscheiben mit peripher zwischen sich angeordneten Mahlplatten, mit einem unter Ausbildung eines Statorsichterraumes mit Abstand oberhalb der Rotorschleuderteller an der rotierbaren Achse angeordneten Fingersichter und mit einer, vorzugsweise zentralen und achsnahen unterseitigen, Hauptluftzufuhr sowie mit einer Produktzuführung und einer oberseitigen Produkt- und Luftabführung oberhalb des Fingersichters. Schließlich richtet sich die Erfindung auf die Verwendung einer Luftwirbelmühle in einem Verfahren zur Herstellung von Titandioxidpigment.

Für eine schonende Vermahlung verschiedenster Produkte sind aus dem Stand der Technik Luftwirbelmühlen bekannt und in den verschiedensten Branchen im Einsatz. Es sind effiziente, robuste, langlebige Maschinen, die auf Basis von Luftwirbeln Zerkleinerungsarbeit und Trocknungsarbeit leisten. Weiche bis mittelharte Materialien werden in einem Luftstrom erfasst, in extreme Turbulenzen versetzt und durch Prallwirkungen von Partikel auf Partikel sowie auf Mahlbahn und Werkzeuge an ihren natürlichen Bruchstellen zerkleinert. Die hohe Luftmenge führt entstehende Mahlwärme effizient ab. Eine gleichzeitige Mahlung und Trocknung ist bei Heißgaszufuhr zur Mühle problemlos möglich, auch für klebrige, pastöse oder temperaturempfindliche Materialien ist die Mühle einsetzbar. Das Funktions-Grundprinzip der Luftwirbelmühle basiert auf einem sich mit hoher Peripheriegeschwindigkeit drehenden Rotor, der auf einer massiven Welle fest montiert ist. Durch Drehbewegung und gleichzeitig hohen Luftdurchsatz wird die Luft in extrem schnelle Luftwirbel versetzt, die das Mahlgut aufnehmen und beschleunigen. Eine anschließende Sichterzone trennt Feinprodukt von Grobprodukt, und das Grobprodukt wird kontinuierlich in die untere Mahlzone zurückgeführt. Da die Zerkleinerungsarbeit im Wesentlichen durch Prallvorgänge von Produkt auf Produkt erreicht wird, ist die Mühle sehr verschleißarm und effizient. Verschiedene Stahlwerkzeuge sowie keramische Werkzeuge und Stahlwerkzeuge mit einer Beschichtung aus Keramik oder einer abrasionsfesten Legierung stehen zur Verfügung, um den Verschleiß der Mahlbahnen sowie der Mahlplatten zu minimieren. Die Luftwirbelmühle kann mit einem nachgeschalteten Filterzyklon, in dem wahlweise ein Sichtersystem integriert sein kann, ausgestattet sein, der die Luft von dem erzeugten Produkt trennt und das erhaltene Produkt über Zellradschleusen aus dem Filter austrägt und gewünschtenfalls in die Luftwirbelmühle zurückführt.

Mit einer solchen Luftwirbelmühle ist auch schon Titandioxid vermahlen worden. Allerdings ist dies nur versuchsweise geschehen, da die Luftwirbelmühle aufgrund der sehr starken Agglomerations- und Anbackungseigenschaften des Titandioxids sich sehr schell zusetzte und keine, eine industrielle Produktion sinnvoll ermöglichenden Durchsatzleistungen erzielbar waren.

Bei der Vermahlung von feinteiligen oder körnigen oder partikelförmigen Produkten oder Materialien, die während des Mahlprozesses agglomerieren oder zum Agglomerieren neigen, sind Luftwirbelmühlen bisher aber nicht einsetzbar. Bei der Vermahlung solchen Materials kommt es zu Anbackungen und Anhäufungen des erhaltenen feinteiligen, staub- oder pulverförmigen Stoffes in der Luftwirbelmühle, die nach kurzer Zeit die Luftwirbelmühle zusetzen oder die Durchlassquerschnitte zumindest soweit vermindern, dass eine Mahlung weiteren Produktes unmöglich oder zumindest sehr erschwert und nur mit einer geringen Durchsatzleistung möglich ist.

Im Verlaufe des Herstellungsprozesses von Titandioxidpigment nach dem Sulfatverfahren wird das Titandioxidpigmentmaterial nach der Kalzinierung zu einem Klinkermaterial wieder aufgemahlen und einem Desagglomerationsprozess unterworfen, um die gewünschte Feinheit und Qualität des Titandioxidpigmentmaterials bzw. des dann fertigen Titandioxidpigmentes zu erhalten. Da Titandioxidpigment beim Mahlvorgang zum Zusammenbacken/Verkleben neigt, führt dies zu einer Agglomeration der gemahlenen einzelnen Körner oder Teilchen, die in einem Desagglomerationsschritt wieder aufgelöst werden müssen, damit das gewünschte Kornverteilungsspektrum des Titandioxidpigmentes vorliegt.

Im Stand der Technik ist es daher bekannt, bspw. mit einer Gutbettmühle den Klinker oder das Titandioxidpigmentmaterial zu mahlen und anschließend einen Desagglomerationsprozess, bspw. eine Suspendierung/Auflösung in einer Flüssigkeit oder eine Nass-Desagglomeration, durchzuführen. Bei diesem Verfahren wird nass gemahlen. Auch ist es im Stand der Technik bekannt, mit einer Raimond- oder Prallmühle den Klinker aufzubereiten. Bei diesen Verfahren wird trocken gemahlen. Alle Verfahrensvarianten bedingen einen hohen Energieeinsatz. Außerdem sind die bekannten Mühlen bzw. Mahlvorrichtungen relativ groß dimensioniert und entsprechend aufwendig in der Konstruktion und somit mit hohen Investitionskosten verbunden. Weiterhin verursachen Raimond- und Prallmühlen hohe Lärmemissionen, so dass bei deren Betrieb umfangreiche auf aufwändige Schallschutzmaßnahmen notwendig sind, die entsprechende Investitionskosten verursachen.

Die Dokumente DE 11 64 805 B und DE 198 23 563 A1 beschreiben bekannte Rahlapanraturen mit Luftzumisch-Stufen.

Der Erfindung liegt die Aufgabe zugrunde, eine Lösung zu schaffen, die auch die Vermahlung eines deutliche Agglomerations- und/oder Anbackungsneigung aufweisenden Stoffes oder Produktes ermöglicht.

Bei einem Verfahren der eingangs bezeichneten Art wird diese Aufgabe erfindungsgemäß dadurch gelöst, dass die Mahlung und/oder Desagglomeration und/oder Mahltrocknung in einer Wirbelmühle erfolgt, deren Statorsichterraum während der Mahlung und/oder Desagglomeration und/oder Mahltrocknung mit zusätzlicher Zuluft, insbesondere Druckluft, beaufschlagt wird.

Hierdurch wird es ermöglicht, Luftwirbelmühlen auch für die Vermahlung, Desagglomeration oder Mahltrocknung von zum Agglomerieren und/oder Anbacken neigenden oder Agglomerations- und/oder Anbackungseigenschaften aufweisenden Stoffen oder Produkten, insbesondere für die Vermahlung, Desagglomeration oder Mahltrocknung von Titandioxidpigmentmaterial zu Titandioxidpigment zu verwenden. Die erfinderische Maßnahme verhindert, dass sich die Luftwirbelmühle, insbesondere der Statorraum, zusetzt bzw. dort Anbackungen entstehen, die die Durchsatzleistung der Luftwirbelmühle vermindern.

Da sich das erfindungsgemäße Verfahren insbesondere hervorragend bei der Herstellung von Pigmenten, insbesondere Titandioxidpigment, einsetzen lässt, sieht die Erfindung in Weiterbildung vor, dass der feinteilige Staub oder pulverförmige Stoff ein anorganisches oder organisches Pigment und das partikelförmige Material ein Pigmentvorprodukt ist.

Hierbei lässt sich das Verfahren in vorteilhafter Weise dann anwenden, wenn der feinteilige, staub- oder pulverförmige Stoff, ein Titandioxidpigment und das partikelförmige Material ein Titandioxidpigmentvorprodukt ist, was die Erfindung ebenfalls vorsieht.

In einer weiteren Ausgestaltung zeichnet sich das Verfahren weiterhin auch dadurch aus, dass das partikelförmige Material ein Titandioxidrohpigment, hergestellt nach dem Sulfat- oder dem Chloridprozess, ist. Unter Titandioxidrohpigment wird hier nicht mit anorganischen Verbindungen beschichtetes agglomeriertes Titandioxid verstanden.

Es ist erfindungsgemäß weiterhin möglich, dass der feinteilige, staub- oder pulverförmige Stoff ein nachbehandeltes Titandioxid ist.

In vorteilhafter Weise lässt sich das erfindungsgemäße Verfahren als Mahltrocknung dann anwenden, wenn das feuchte Material eine Pigmentsuspension, ein Pigmentfiltratkuchen und/oder ein Pigmentvorprodukt ist.

Weiterhin zeichnet sich das Verfahren dadurch aus, dass das feuchte Material Titanhydrat umfasst oder eine titanhydrathaltige Mischung, insbesondere zur Herstellung von Katalysatoren, oder eine Titandioxidsuspension oder ein Titanoxidfilterkuchen, ist.

In Ausgestaltung sieht die Erfindung weiterhin bei einem Verfahren zur Herstellung von Titandioxidpigment nach dem Sulfatverfahren vor, dass der Kalzinierungsstufe des Titandioxidpigmentmaterials oder einer Filtrationsstufe des Titandioxidpigmentmaterials, insbesondere im Anschluss an die Hydrolysestufe, ein Mahl- und/oder Desagglomerationsbehandlungsschritt des Titandioxidpigmentmaterials folgt, der die Vermahlung des Titandioxidpigmentmaterials in der Luftwirbelmühle umfasst, deren Statorsichterraum während des Mahl- und/oder Desagglomerationsvorganges zusätzlich mit Zuluft, insbesondere Druckluft, beaufschlagt wird.

In zweckmäßiger Weiterbildung sieht die Erfindung vor, dass dem Statorsichterraum über umfangsmäßig radial in oder an einer Statorzylinderwand angeordnete Lufteinlässe Zuluft, vorzugsweise Druckluft, zugeführt, insbesondere in diesen eingeblasen wird. Dies ist eine besonders effektive Maßnahme, um Anbackungen im Sichterraum zu verhindern. Vorteilhafterweise wird Druckluft mit einem Druck von 1 bis 4 bar in den Statorzylinderinnenraum, insbesondere den Statorsichterraum, eingeblasen.

In besonders vorteilhafter Weise lässt sich ein Verfahren zur Herstellung von Titandioxidpigment dann realisieren, wenn die Luftwirbelmühle zusammen mit einer Walzenmühlenmahlung verwendet wird. Die Erfindung sieht daher weiterhin vor, dass die Mahlung und/oder Desagglomeration oder der Mahl- und/oder Desagglomerationsbehandlungsschritt eine Walzenmühlenmahlung mit, vorzugsweise unmittelbar, nachfolgender Luftwirbelmühlenmahlung umfasst.

In vorteilhafter Weise kann eine Luftwirbelmühle auch im Zusammenhang mit Coatierungsvorgängen während der Titandioxidpigmentherstellung verwendet werden. Die Erfindung zeichnet sich daher weiterhin dadurch aus, dass die Mahlung und/oder Desagglomeration oder der Mahl- und/oder Desagglomerationsbehandlungsschritt, vorzugsweise unmittelbar, auf einen Coatierungs-/Beschichtungsvorgang des Titandioxidpigmentmaterials folgt oder Bestandteil des Kotierungs-/Beschichtungsvorganges ist.

Auch im Rahmen der Nachbehandlung von Titandioxidpigmentmaterial im Rahmen eines üblichen Titandioxidpigmentherstellungsprozesses kann die Mahlung und/oder Desagglomeration oder der Mahl- und/oder Desagglomerationsbehandlungsschritt durchgeführt werden, weshalb die Erfindung weiterhin vorsieht, dass die Mahlung und/oder Desagglomeration oder der Mahl- und/oder Desagglomerationsbehandlungsschritt in einem Nachbehandlungsprozess des Titandioxidpigmentmaterials durchgeführt wird.

Von besonderem Vorteil ist es, wenn die Mahlung und/oder Desagglomeration oder der Mahl- und/oder Desagglomerationsbehandlungsschritt zwischen einer der Kalzinierung nachfolgenden Silobevorratung des Titandioxidpigmentmaterials und einem nachfolgenden Suspensierungs- und/oder Nachbehandlungsschritt des Titandioxidpigmentmaterials oder dem Abpackvorgang des Titandioxidpigmentes durchgeführt wird.

Von Vorteil ist es weiterhin, wenn das Verfahren mit einer speziell angepassten Luftwirbelmühle durchgeführt wird. Die Erfindung zeichnet sich daher weiterhin dadurch aus, dass das Verfahren in einer Luftwirbelmühle nach einem der Ansprüche 15 bis 27 durchgeführt wird.

Bei einer Luftwirbelmühle der eingangs bezeichneten Art wird die Aufgabe erfindungsgemäß dadurch gelöst, dass der Statorzylinder in Höhe des Statorsichterraumes am Umfang der Statorzylinderwand verteilt angeordnete Lufteinlässe aufweist, die im Betriebszustand der Luftwirbelmühle mit dem Statorsichterraum radial zuströmender Zuluft, insbesondere Druckluft, beaufschlagbar sind.

Mit einer solchen Luftwirbelmühle lässt sich im Rahmen des Titandioxidpigmentherstellungsprozesses Titandioxidpigmentmaterial besonders vorteilhaft, d.h. mit relativ geringem Energieeinsatz, auf die gewünschte Korngrößenverteilung und Qualität aufmahlen. Eine solche Luftmühle ist auch von den Investitionskosten her deutlich günstiger als bisher eingesetzte Mühlen.

Für die Erzielung hoher Durchsatzleistungen ist es gemäß Weiterbildung der Erfindung von Vorteil, wenn in der Produkt- und Luftabführung ein Abscheidezyklon, vorzugsweise mit eingebautem, insbesondere motorgetriebenem Radialsichter angeordnet ist, der in leitungsmäßiger Produktrückführverbindung mit dem Innenraum des Statorzylinders steht. Eine hohe Durchsatzleistung lässt sich deshalb erreichen, weil in dem ersten Sichterraum der Luftwirbelmühle nicht alles "Grobmaterial" zurückgehalten werden muss, das die gewünschte Korngrößenverteilung nicht aufweist. Dies kann im nachgeschalteten Abscheidezyklon geschehen, so dass dadurch insgesamt eine ausreichend hohe Durchsatzleistung erzielbar ist.

Um im Statorsichterraum Anbackungen zu verhindern, ist es notwendig, zumindest zweckmäßig, dass die Überkorn rückführende Produktrückführleitung sich nicht zusetzt. Gemäß Ausgestaltung der Erfindung wird dies dadurch vermieden, dass im Statorsichterraum die Produktrückführeintrittsmündung einer querschnittlich kreisförmigen Produktrückführleitung mit Verbindung zum Innenraum des Statorzylinders angeordnet ist.

Eine weitere Maßnahme, um ein Zusetzen der Luftwirbelmühle zu verhindern, insbesondere aber auch eine hohe Durchsatzleistung zu erzielen, besteht in Ausgestaltung der Erfindung darin, dass der Fingersichter zwischen seinen Fingern jeweils eine Spalt mit einem Abstand zwischen den Fingern von 3 bis 8 mm am äußeren Ende der Finger aufweist.

Hierbei kann es dann weiterhin vor Vorteil sein, wenn der Fingersichter auf der den Schleudertellern zugewandten Seite in seinem Zentrum ein aufgesetztes Abdeckblech aufweist.

Zur Vermeidung des Austragens von Spritzkorn oder Überkorn in die Produktzuführleitung zum Abscheidezyklon zeichnet sich die Erfindung weiterhin dadurch aus, dass oberhalb des Fingersichters eine von der Statorraumzylinderwand kreisringförmig in den Statorsichterraum hineinragende Abdeckplatte mit zentraler Öffnung ausgebildet ist.

Um besonders gute Durchsatzleistungen zu erzielen und ein Verkleben/Zusetzen des Abscheidezyklons mit den Statorzylinder durchlaufen habendem Titandioxidpigment zu verhindern, ist es gemäß Weiterbildung der Erfindung von Vorteil, dass in dem Abscheidezyklon ein motorgetriebenes Radialsichterlamellenblatt mit einem Lamellenabstand von 10 bis 30 mm, vorzugsweise 15 bis 25 mm, abgeordnet ist.

Um eine kontinuierliche Produktrückführung vom Abscheidezyklon zum Innenraum des Statorzylinders zu erzielen, ist es weiterhin zweckmäßig, wenn in der Produktrückführleitung unterhalb des Abscheidezyklons eine Zellenradschleuse angeordnet ist. Diese Zellenradschleuse dient auch dem Druckausgleich innerhalb des Mahlsystems. Die gesamte Luftwirbelmühle einschließlich der Rohrleitungssysteme, des Zyklons und der nachgeschaltete Staubfilter (Schlauchfilter) wird im Unterdruckbereich betrieben, so dass ohne die Zellenradschleuse Produkt aus dem Statorzylinder ohne Vermahlung in den Abscheidezyklon gesaugt werden könnte. Der Absaugventilator, der für das gesamte System den Unterdruck erzeugt, ist hinter dem Schlauchfilter auf der Reingasseite angeordnet, so dass im Bereich des Zyklons der höchste Unterdruck im Bereich der Luftwirbelmühle herrscht.

Weiterhin hat sich herausgestellt, dass sich eine besonders gute Vermahlung von Titandioxidpigmentmaterial dann erreichen lässt, wenn die Schleuderteller mit einer Umfangsgeschwindigkeit von insbesondere 120 bis 130 m/s rotieren. Die Erfindung sieht daher weiterhin vor, dass die Schleuderteller mit einer Umfangsgeschwindigkeit von 100 bis 150 m/s, insbesondere 120 bis 130 m/s, rotierbar sind.

Da Titandioxidpigmentmaterial äußerst hart ist, lassen sich besonders hohe Standzeiten der Mahlplatten dann erreichen, wenn die Mahlplatten aus Keramik bestehen oder mit Keramik oder einer abrasionsfesten Legierung beschichtet sind, was die Erfindung ebenfalls vorsieht.

Es können Keramiken, wie z.B. Aluminiumoxidkeramik, Silikatkeramik, Zirkonoxid, Verbündsysteme (z.B. unterschiedliche Keramiken in Trägermaterialien wie Polyurethan) oder Siliziumoxid vorgesehen werden. Auch verschleißfeste Aufschweißlegierungen aus z.B. Wolfram- und/oder Aluminium-Carbid können Verwendung finden. Diese Legierungen können mittels Pulverbeschichtungsverfahren aufgetragen werden. Die aufgetragenen Werkstoffschichtungen sollen einen Härtegrad von mind. 50 HRC, vorzugsweise >60HRC, aufweisen.

In Ausgestaltung sieht die Erfindung weiterhin vor, dass eine dritte Rückführleitung in ihrem Einmündungsbereich in den Innenraum des Statorzylinders eine Transportschnecke aufweist. Hierdurch ist das rückgeführte Grobmaterial sicher und gezielt in den Innenraum des Statorzylinders rückführbar.

Um in dem Statorzylinder der Luftwirbelmühle auch eine Coatierung des gemahlenen Produktes vorsehen zu können, zeichnet sich die Erfindung weiterhin dadurch aus, dass in den Innenraum des Statorzylinders eine Coatierungsmittelzuführleitung einmündet.

Zur Freihaltung des Statorzylinderinnenraums von Anbackungen oder Anhaftungen des gemahlenen Titandioxidpigmentmaterials sieht die Erfindung weiterhin vor, dass im Statorinnenraum des Statorzylinders oberhalb des Fingersichters, insbesondere oberhalb der ringförmigen Abdeckplatte, ein Ventilatorrad angeordnet ist.

Schließlich zeichnet sich die Erfindung zur Lösung der oben stehenden Aufgabe auch noch durch die Verwendung einer Luftwirbelmühle nach einem der Ansprüche 15 bis 27 in einem Verfahren nach einem der Ansprüche 1 bis 14 aus.

Die Erfindung ist nachstehend anhand der Zeichnung beispielhaft näher erläutert.

Diese zeigt
- Fig. 1: in schematischer, teilweise geschnittener Seitenansicht eine erfindungsgemäße Luftwirbelmühle,
- Fig. 2: einen Fingersichter in der Ansicht A-A von Fig. 1 in vergrößerter Darstellung,
- Fig. 3: eine Mahlplatte und in
- Fig. 4: in schematischer Darstellung erfindungsgemäße Verfahrensabläufe mit einem Mahl- und/oder Desagglomerationsschritt in einer Luftwirbelmühle.

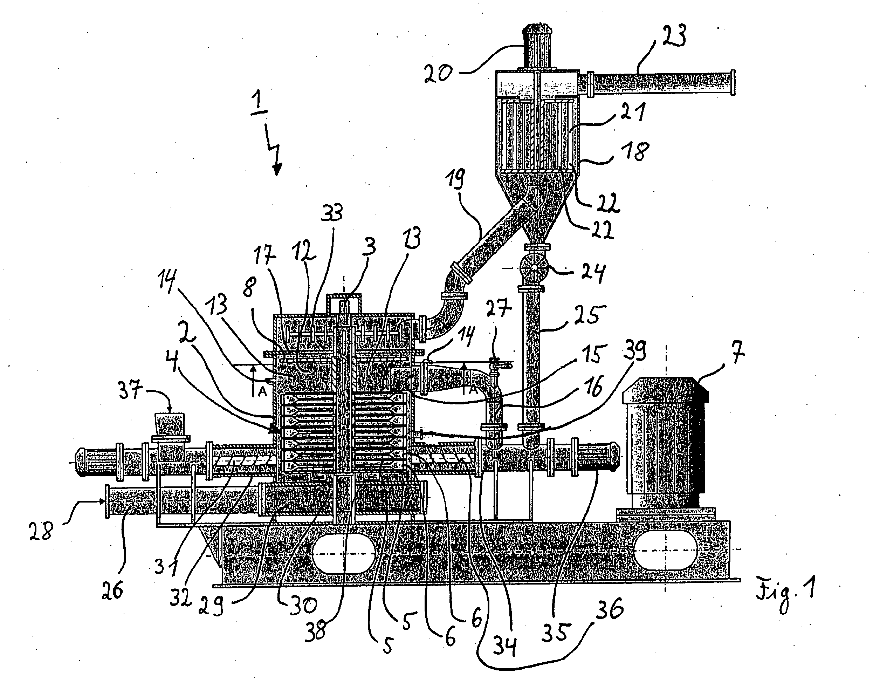

Die in der Fig. 1 insgesamt mit 1 bezeichnete Luftwirbelmühle umfasst einen Statorzylinder 2 mit darin vertikal drehbeweglich angeordneter Rotorachse 3. Die Rotorachse 3 ist außerhalb des Innenraums des Statorzylinders 2 gelagert und längs der Längsachse des Statorzylinders 2 angeordnet. An der Rotorachse 3 sind jeweils eine Mahlstufe ausbildende Rotorschleuderteller 4 in Form von Schleuderscheiben 5 mit peripher zwischen sich angeordneten Mahlplatten 6 drehfest angeordnet. Mittels eines Elektromotors 7 ist die Rotorachse 3 mittels einer nicht dargestellten Antriebsverbindung hochtourig in Rotation zu versetzen. Hierbei werden Umfangsgeschwindigkeiten am äußeren Rand der Schleuderscheiben 5 von 100 bis 150 m/s erreicht. Mit Abstand zu der obersten Schleuderscheibe 5 ist an der Rotorachse 3 ebenfalls drehfest ein Fingersichter 8 angeordnet. Der Fingersichter 8 besteht aus acht einzelnen Fingern 9, die zwischen sich eine keilförmig auf die das Zentrum des Fingersichters 8 bildende Achse 3 zulaufende Spalte 10 aufweisen. Im peripheren äußeren breitesten Maß des jeweiligen Spaltes 10 beträgt der Abstand zwischen zwei Fingern 9 3 bis 8 mm, vorzugsweise 8 mm. Auf der den Schleuderscheiben 5 zugewandten Seite ist an dem Fingersichter 8 ein kreisringförmiges Abdeckblech 11 befestigt, vorzugsweise angeschweißt. Zwischen dem Fingersichter 8 und dem obersten Rotorschleuderteller 4 ist im Innenraum des Statorzylinders 2 ein Statorsichterraum 12 ausgebildet, dessen Höhe durch den Abstand zwischen der obersten Schleuderscheibe 5 und dem Fingersichter 8 bestimmt ist. In den Statorsichterraum 12 münden am Umfang der Wand des Statorzylinders 2 gleichmäßig verteilt Luftzuführungen bzw. Lufteindüsungen 13 ein. Durch diese, radial auf die Rotorachse 3 ausgerichteten Luftzuführungen bzw. Lufteindüsungen 13 wird durch eine außerhalb des Statorzylinders 2 umlaufend angeordnete Zuführleitung 14 Druckluft in den Statorsichterraum 12 eingeblasen. In Höhe der Luftzuführungen 13 mündet in den Statorsichterraum 12 weiterhin die Produkteintrittsöffnung 15 einer Produktrückführleitung 16 ein, durch welche Grobprodukt in den Innenraum des Statorzylinders 2 rückgeführt wird.

Oberhalb des Fingersichters 8 ist eine sich von der Wand des Statorzylinders 2 nach innen erstreckende kreisringförmige Abdeckplatte 17 mit zentraler Öffnung an dem Statorzylinder 2 angeordnet. Oberhalb der kreisringförmigen Abdeckplatte 17 mündet eine zu einem Abscheidezyklon 18 führende Produkt- und Luftabführungsleitung 19 in den Innenraum des Statorzylinders 2 ein.

In diesem Raum oberhalb der Abdeckplatte 17 ist ein Ventilator 33 an der rotierbaren Rotorachse 3 befestigt, das den Austrag des Mahlprodukt-Luftgemischs aus dem Statorzylinder 2 heraus und in die Produkt- und Luftabführleitung 19 hinein bewirkt, zumindest aber unterstützend fördert.

Der Abscheidezyklon 18 ist mit einem von einem Elektromotor 20 angetriebenen, rotierbaren Radialsichterrad 21 ausgestattet, das mit einem Abstand von 15 bis 25 mm beabstandete stabförmige Lamellen 22 aufweist. In dem Abscheidezyklon 18 werden die aus dem Statorzylinder 2 abgeführte Luft und das das gewünschte Kornspektrum aufweisende Material einerseits sowie rückzuführendes Material andererseits getrennt. Die Luft und das das gewünschte Kornverteilungsspektrum bzw. die gewünschte Größe aufweisende Material treten aus dem Zyklon 18 in eine Leitung 23 ein, die zu einem Schlauchfilter führt, dem reingasseitig ein Absaugventilator nachgeschaltet ist. Das rückzuführende Produkt wird mit Hilfe einer Zellenradschleuse 24 aus dem Abscheidezyklon 18 ausgetragen und mit Hilfe einer weiteren Produktrückführleitung 25 in den Bereich der Luftwirbelmühle 1 bzw. des Statorzylinder 2 zurückgeführt.

Die Produktrückführleitungen 16, 25 münden in eine horizontal ausgerichtete dritte Produktrückführleitung 34, die in Höhe der unteren beiden Mahlstufen der insgesamt sieben durch die Mahlplatten 6 definierten Mahlstufen des Rotorschleudertellermahlwerks in den Innenraum des Statorzylinders 2 einmündet. In der dritten Produktrückführleitung 34 ist eine von einem Elektromotor 35 angetriebene Transportschnecke 36 angeordnet, die das rückgeführte Produkt bzw. Grobmahlgut in den Innenraum des Statorzylinders 2 einträgt. Die gezielte Zuführung des rückgeführten Produkts auf die untersten beiden Mahlstufen bewirkt eine gute Zerkleinerung des Produktes, da der erste Mahlaufprall die Feinheit des entstehenden Mahlgutes maßgeblich beeinflusst und bestimmt.

Um das rückzuführende Produkt/Gut in der Produktrückführleitung 16 pneumatisch fördern zu können, ist an dieser Leitung ein Luftzufuhranschluss 27 angeordnet. Mit einer Hauptluftzufuhrleitung 26 wird der Luftwirbelmühle 1 bzw. dem Statorzylinder 2 in Pfeilrichtung 28 Luft zugeführt. Die Hauptluftzufuhrleitung 26 mündet in eine im unteren Bereich des Statorzylinders 2 angeordnete Hauptluftzufuhrkammer 29 mit einer zentralen, achsnahen Hauptluftzufuhröffnung 30 in den Innenraum des Statorzylinders 2.

Bei hochtourig angetriebenen Rotorschleudertellern 4 wird mittels einer eine Zuführschnecke 31 aufweisenden und in Höhe der unteren Schleuderscheiben 5 bzw. der unteren beiden Mahlstufen in den Statorzylinder 2 einmündender Zuführleitung 32 das in der Luftwirbelmühle 1 zu vermahlende Produkt zugeführt. Das Produkt tritt in Pfeilrichtung 37 in die Zuführleitung 32 ein und wird im Bereich der von den Schleuderscheiben 5 bzw. den Rotorschleudertellern 4 ausgebildeten Mahlstufen zerkleinert und dann nach Durchströmen des Statorsichterraumes 12 mit Hilfe des Ventilatorrades 33 durch die Leitung 19 in den Abscheidezyklon 18 transportiert und durch die Leitung 23 ausgetragen. Zu grobes Korn wird über die Produktrückführleitung 16 oder, wenn es erst im Abscheidezyklon 18 abgeschieden wird, durch die Produktrückführleitung 25 der dritten Produktrückführleitung 34 und dann dem Mahlbereich der Luftwirbelmühle 1 wieder zugeführt.

Hierbei herrscht im gesamten System.Unterdruck, der durch einen reingasseitig angeordneten, mit der Leitung 23 in Verbindung stehenden Absaugventilator erzeugt wird. Im Innenraum des Statorzylinders 2 wird weiterhin durch die hohe Rotationsgeschwindigkeit der Rotorschleuderteller 4 ein Unterdruck erzeugt. Ebenso herrscht in dem Zyklon 18 ein Unterdruck. Dabei ist der Unterdruck umso stärken, je mehr man sich der Leitung 23 nähert. Damit aus dem Abscheidezyklon 18 Grobprodukt in die Produktrückführleitung 25 ausgetragen werden kann, ist die Zellenradschleuse 24 notwendig. Wäre diese nicht vorhanden, könnte nämlich Produkt rückwärts über die Leitungen 34 und 25 in den Abscheidezyklon 18 und dann ggf. in die Leitung 23 gesaugt werden.

Unterhalb der untersten Mahlstufe ist zentral im Bereich der Hauptluftzuführungsöffnung 34 im Innenraum des Statorzylinders 2 ein Verteilerrad 38 angeordnet. Dieses Verteilerrad bewirkt unter anderem, dass mittels der Transportschnecke 36 in den Innenraum des Statorzylinders 2 eingeführtes rückgeführtes Grobprodukt unterhalb der Rotorschleuderteller 4 gut verteilt und dann dem zwischen den Malplatten 6 und der Innenwand des Statorzylinders 2 ausgebildeten ringförmigen Spalt, dem eigentlichen Mahlspalt, zugeführt wird.

Weiterhin ist oberhalb der Einmündung der Zuführleitung 32 sowie der dritten Produktrückführleitung 34 eine in den Innenraum des Statorzylinders 2 einmündende Rohrleitung 39 bzw. ein Rohranschlussstutzen vorgesehen, durch welche(n) hindurch Coatierungsmaterial in den Innenraum des Statorzylinders 2 eingebracht werden kann. Das Coatierungsmaterial kann mittels einer Pumpe in flüssiger Form oder mittels einer weiteren Schnecke in fester Form vorliegend in den Innenraum des Statorzylinders 2 eingebracht werden. Dort benetzt und belegt das Coatierungsmaterial dann die während des Mahlprozesses entstehenden Oberflächen des Mahlgutes.

In den Statorsichterraum 12 wird durch die Luftzuführungen 13 Luft mit einem Druck von 1 bis 4 bar, vorzugsweise im Bereich von 3 bis 4 bar, eingeblasen. Diese Lufteinblasung verhindert, dass das entstandene Mahlprodukt sich an den Innenwände des Statorzylinders 2, dem Fingersichter 8 oder sonstigen Bereichen der Luftwirbelmühle 1 anhaftend festsetzt, was dann zu einem Verstopfen der Luftwirbelmühle und einem Nachlassen der Durchsatzleistung führt. Es hat sich herausgestellt, dass allein die Ausbildung der Luftzuführungsöffnungen 13, ohne dass ein Einblasen von Luft mit erhöhtem Druck erfolgt, eventuell keine das Anhaften und Anbacken des Produktes verhindernde Verwirbelung im Statorsichterraum 12 bewirkt. Da im Innenraum des Statorzylinders 2 Unterdruck herrscht, würde durch mit der Außenatmosphäre verbundene Luftzuführungen 13 Luft in den Innenraum des Statorzylinders 2 eingesaugt, was aber die notwendige Verwirbelung nicht in jedem Fall ausreichend gewährleistet.

Das in der Luftwirbelmühle 1 vermahlene Titandioxidpigmentmaterial ist äußerst hart und abrasiv, so dass die Mahlplatten 6, aber auch die Oberfläche des Ventilatorrades 33 sowie die Lamellen 22 des Radialsichterrades 21 mit abrasionsfesten Werkstoffen beschichtet sind. Hierbei kann der abrasionsfeste Werkstoff ein keramischer Werkstoff, d.h. eine keramische oder metallische Beschichtung sein. Es ist aber auch möglich, dass die Mahlplatten 6, das Ventilatorrad 33 und/oder das Radialsichterrad 21 bzw. dessen Lamellen 22 aus Keramik bestehen.

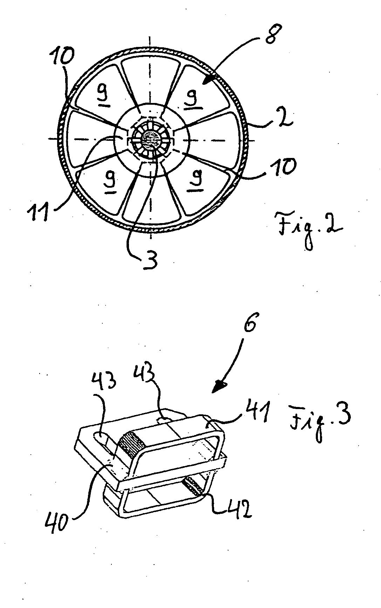

Eine besonders effektive Mahlplatte 6 ist in der Fig. 3 dargestellt. Eine solche Mahlplatte besteht aus einer flächigen Grundplatte 40, auf deren Oberseiten im Bereich der vorderen Mahlkante jeweils eine bügelförmige, weitere Platte 41, 42 senkrecht angeordnet ist. Die steg- und bügelförmigen Platten 41, 42 sind an ihren Eckbereichen abgerundet und bilden mit der Grundplatte 40 eine für die Vermahlung von Titandioxidpigmentmaterial besonders wirksame Mahlplatte 6 aus. Mittels Langlöcher 43 durchgreifender Schrauben ist die Mahlplatte 6 an Rotorschleudertellern 4 befestigbar. Insbesondere die untersten beiden Mahlstufen sind in vorteilhafter Weise mit einer solchen Mahlplatte ausgestattet. Diese Mahlplatte weist aufgrund ihrer Ausgestaltung mehrere Mahlpunkte oder Mahlflächen auf, so dass damit das Pigmentmaterial besonders fein gemahlen werden kann.

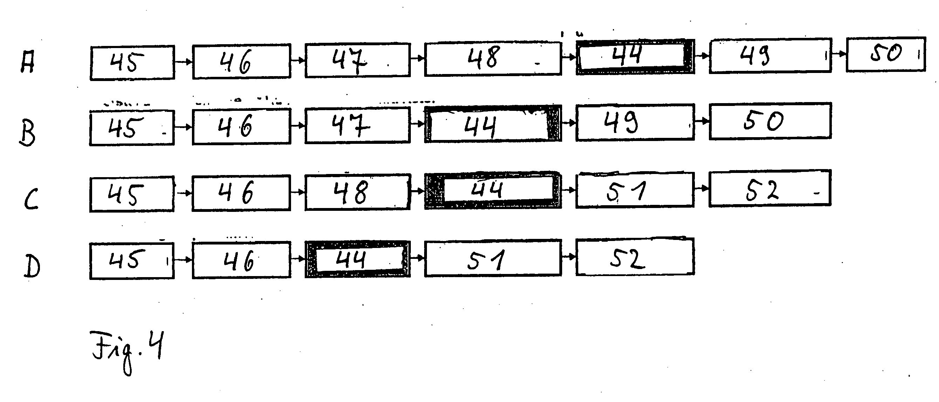

Ein Verfahrensschema, welches die Anordnung der Mahl- und/oder Desagglomerationsbehandlungsstufe bzw. dieses Schrittes im Rahmen eines Titandioxidpigmentherstellungsprozesses schematisch darstellt, ist aus der Fig. 4 ersichtlich.

Die Fig. 4 zeigt in den Zeilen A-D schematisch Verfahrensabläufe, bei welchen Titandioxidpigmentmaterial im Rahmen einer Mahl- und/oder Desagglomerationsbehandlungsstufe einer Mahlung 44 in einer erfindungsgemäßen Luftwirbelmühle 1 unterworfen wird.

Die Zeile A zeigt die Herstellung unbehandelten Rutils in einem einer Walzenmahlung 48 nachfolgenden Mahl- und/oder Desagglomerationsbehandlungsschritt 44 mit der Luftwirbelmühle 1. Diese Abfolge des Titandioxidpigmentherstellungsprozesses umfasst die Kalzinierung 45 des Titandioxidpigmentmaterials, die anschließende Silolagerung 46 sowie die darauf folgende Coatierung 47, nach welcher das Titandioxidpigmentmaterial einer Walzenmahlung 48 unterworfen wird, bevor dann der Mahl- und/oder Desagglomerationsbehandlungsschritt 44 in der Luftwirbelmühle 1 folgt. Anschließend wird das gemahlene Titandioxidpigmentmaterial mittels einer pneumatischen Förderung 49 einer Absackung/Abpackung 50 zugeführt.

Die Zeile B stellt schematisch dieselbe Verfahrensstufenabfolge wie im Falle A dar, wobei auf die Walzenmahlungsstufe 48 allerdings verzichtet wird. Die entsprechenden Verfahrensstufen oder Verfahrensschritte sind mit denselben Bezugszeichen versehen. Während im Fall A die Mahl- und/oder Desagglomerationsbehandlungsstufe sowohl eine Walzenmahlung 48 als auch einen Mahl- und/oder Desagglomerationsbehandlungsschritt 44 in einer Luftwirbelmühle 1 umfasst, besteht der Mahl- und/oder Desagglomerationsbehandlungsschritt 44 im Fall B ausschließlich aus der Luftwirbelmühlenmahlung.

Die Zeilen C und D stellen schematisch die Abfolge von Verfahrensschritten/Verfahrensstufen bei der Herstellung eines Vorproduktes zur Nachbehandlung dar, bei welchem wiederum ein Mahl- und/oder Desagglomerationsbehandlungsschritt 44 unter Verwendung der Luftwirbelmühle 1 vorgesehen ist. Auf eine Kalzinierung 45 und eine Silolagerung 46 folgt im Falle C eine Walzenmahlung 48, der dann die Luftwirbelmühlenmahlungsstufe 44 folgt. Im Falle D entfällt die Walzenmahlung 48. In beiden Fällen schließt sich an die Stufe bzw. den Schritt 44 dann ein Suspendierungsschritt 51 an, bevor dann das Titandioxidpigmentmaterial einer Nachbehandlung 52 unterzogen wird.

Bei einer Mahltrocknung wird der Luftwirbelmühle 1 feuchtes Produkt über die Schnecke 31 zugeführt. Hierbei kann es sich insbesondere um bei der Titandioxidpigmentherstellung anfallendes Titandioxid-Filterkuchenmaterial handeln. Aber auch die Mahltrocknung von sonstigen Filterkuchen, Pigmentfilterkuchen, Pigmentsuspensionen oder Pigmentvorprodukten ist möglich. Bei der Mahltrocknung von Titandioxidpigmentmaterial enthält das feuchte Material Titanhydrat oder eine titanhydrathaltige Mischung oder es handelt sich um eine Titandioxidsuspension oder einen Titandioxidfilterkuchen, wie er im Herstellungsprozess nach dem Sulfatverfahren üblicherweise anfällt.

Bei der Mahltrocknung erfolgt im Statorinnenraum sowohl die Mahlung als auch die Trocknung oder eine gewisse Trocknung des eingebrachten Materials. Vorzugsweise wird bei der Mahltrocknung vorgewärmte, erwärmte oder erhitzte Luft durch den Luftzufuhranschluss 27 der Hauptluftkammer 29 zugeführt.

## Patentansprüche

1. Verfahren zur Herstellung eines feinteiligen, stauboder pulverförmigen Stoffes durch Mahlung und/oder Desagglomeration eines partikelförmigen, insbesondere körnigen, und/oder agglomerierten Materials und/oder durch Mahltrocknung eines feuchten, vorzugsweise feinteiligen, Materials, insbesondere Filterkuchens,
**dadurch gekennzeichnet,**
**dass** die Mahlung und/oder Desagglomeration und/oder Mahltrocknung in einer Luftwirbelmühle (1) erfolgt, deren Statorsichterraum (12) während der Mahlung und/oder Desagglomeration und/oder Mahltrocknung mit zusätzlicher Zuluft, insbesondere Druckluft, beaufschlagt wird.

2. Verfahren nach Anspruch 1, **dadurch gekennzeichnet, dass** der feinteilige, staub- oder pulverförmige Stoff ein anorganisches oder organisches Pigment und das partikelförmige Material ein Pigmentvorprodukt ist.

3. Verfahren nach Anspruch 1 oder 2, **dadurch gekennzeichnet, dass** der feinteilige, staub- oder pulverförmige Stoff ein Titandioxidpigment und das partikelförmige Material ein Titandioxidpigmentvorprodukt ist.

4. Verfahren nach einem der vorhergehenden Ansprüche, **dadurch gekennzeichnet, dass** das partikelförmige Material ein Titandioxidrohpigment, hergestellt nach dem Sulfat- oder dem Chloridprozess, ist.

5. Verfahren nach einem der vorhergehenden Ansprüche, **dadurch gekennzeichnet, dass** der feinteilige, staub- oder pulverförmige Stoff ein nachbehandeltes Titandioxidpigment ist.

6. Verfahren nach einem der vorhergehenden Ansprüche, **dadurch gekennzeichnet, dass** das feuchte Material eine Pigmentsuspension, ein Pigmentfilterkuchen und/oder ein Pigmentvorprodukt ist.

7. Verfahren nach einem der vorhergehenden Ansprüche, **dadurch gekennzeichnet, dass** das feuchte Material Titanhydrat umfasst oder eine titanhydrathaltige Mischung, insbesondere zur Herstellung von Katalysatoren, oder eine Titandioxidsuspension oder ein Titandioxidfilterkuchen, ist.

8. Verfahren nach einem der vorhergehenden Ansprüche zur Herstellung von Titandioxidpigment nach dem Sulfatverfahren, **dadurch gekennzeichnet, dass** der Kalzinierungsstufe des Titandioxidpigmentmaterials oder einer Filtrationsstufe des Titandioxidpigmentmaterials, insbesondere im Anschluss an die Hydrolysestufe, ein Mahl- und/oder Desagglomerationsbehandlungsschritt (44) des Titandioxidpigmentmaterials folgt, der die Vermahlung des Titandioxidpigmentmaterials in der Luftwirbelmühle (1) umfasst, deren Statorsichterraum (12) während des Mahl- und/oder Desagglomerationsvorganges mit zusätzlicher Zuluft, insbesondere Druckluft, beaufschlagt wird.

9. Verfahren nach einem der vorhergehenden Ansprüche, **dadurch gekennzeichnet, dass** dem Statorsichterraum (12) über umfangsmäßig radial in oder an einer Statorzylinderwand angeordnete Lufteinlässe (13) Zuluft, vorzugsweise Druckluft, besonders bevorzugt mit einem Druck von 1 bis 4 bar, zugeführt, insbesondere in den Statorsichterraum (12) eingeblasen wird.

10. Verfahren nach einem der vorhergehenden Ansprüche, **dadurch gekennzeichnet, dass** die Mahlung und/oder Desagglomeration oder der Mahl- und/oder Desagglomerationsbehandlungsschritt (44, 48) eine Walzenmühlenmahlung (48) mit, vorzugsweise ummittelbar, nachfolgender Luftwirbelmühlenmahlung (44) umfasst.

11. Verfahren nach einem der vorhergehenden Ansprüche, **dadurch gekennzeichnet, dass** die Mahlung und/oder Desagglomeration oder der Mahl- und/oder Desagglomerationsbehandlungsschritt (44), vorzugsweise unmittelbar, auf einen Coatierungs-/Beschichtungsvorgang (47) des Titandioxidpigmentmaterials folgt oder Bestandteil des Coatierungs-/Beschichtungsvorganges ist.

12. Verfahren nach einem der vorhergehenden Ansprüche, **dadurch gekennzeichnet, dass** die Mahlung und/oder Desagglomeration oder der Mahl- und/oder Desagglomerationsbehandlungsschritt (44) in einem Nachbehandlungsprozess des Titandioxidpigmentmaterials durchgeführt wird.

13. Verfahren nach einem der vorhergehenden Ansprüche, **dadurch gekennzeichnet, dass** die Mahlung und/oder Desagglomeration oder der Mahl- und/oder Desagglomerationsbehandlungsschritt (44) zwischen einer der Kalzinierung (45) nachfolgenden Silobevorratung (46) des Titandioxidpigmentmaterials und einem nachfolgenden Suspensierungs- und/oder Nachbehandlungsschritt (51, 52) des Titandioxidpigmentmaterials oder dem Abpackvorgang (50) des Titandioxidpigments durchgeführt wird.

14. Verfahren nach einem der vorhergehenden Ansprüche, **dadurch gekennzeichnet, dass** das Verfahren in einer Luftwirbelmühle nach einem der Ansprüche 15 bis 27 durchgeführt wird.

15. Luftwirbelmühle (1) umfassend einen Statorzylinder (2) mit darin an einer hochtourig rotierbaren Achse (3) koaxial übereinander angeordneten, jeweils Mahlstufen ausbildenden Rotorschleudertellern (4), vorzugsweise in Form von Schleuderscheiben (5) mit peripher zwischen sich angeordneten Mahlplatten (6),
mit einem unter Ausbildung eines Statorsichterraums (12) mit Abstand oberhalb der Rotorschleuderteller (4) an der rotierbaren Achse (3) angeordneten Fingersichter (8) und mit einer, vorzugsweise zentralen und achsnahen unterseitigen, Hauptluftzufuhr (26, 29)
sowie mit einer Produktzuführung (32) und einer oberseitigen Produkt- und Luftabführung (19) oberhalb des Fingersichters (8),
**dadurch gekennzeichnet,**
**dass** der Statorzylinder (2) in Höhe des Statorsichterraums (12) am Umfang der Statorzylinderwand verteilt angeordnete Lufteinlässe (13) aufweist, die im Betriebszustand der Luftwirbelmühle (1) mit dem Statorsichterraum (12) radial zuströmender Zuluft, insbesondere Druckluft, beaufschlagbar sind.

16. Luftwirbelmühle nach Anspruch 15, **dadurch gekennzeichnet, dass** in der Produkt- und Luftabführung (19) ein Abscheidezyklon (18), vorzugsweise mit eingebautem, insbesondere motorgetriebenem, Radialsichter (21) angeordnet ist, der in leitungsmäßiger Produktrückführverbindung (25) mit dem Innenraum des Statorzylinders (2) steht.

17. Luftwirbelmühle nach Anspruch 15 oder 16, **dadurch gekennzeichnet, dass** im Statorsichterraum (12) die Produktrückführeintrittsmündung (15) einer querschnittlich kreisförmigen Produktrückführleitung (16) mit Verbindung zum Innenraum des Statorzylinders (2) angeordnet ist.

18. Luftwirbelmühle nach einem der Ansprüche 15 bis 17, **dadurch gekennzeichnet, dass** der Fingersichter (8) zwischen seinen Fingern (9) jeweils einen Spalt (10) mit einem Abstand zwischen den Fingern (9) von 3 bis 8 mm am äußeren Ende der Finger (9) aufweist.

19. Luftwirbelmühle nach einem der Ansprüche 15 bis 18, **dadurch gekennzeichnet, dass** der Fingersichter (8) auf der den Schleudertellern (4) zugewandten Seite in seinem Zentrum ein aufgesetztes Abdeckblech (11) aufweist.

20. Luftwirbelmühle nach einem der Ansprüche 15 bis 19, **dadurch gekennzeichnet, dass** oberhalb des Fingersichters (8) eine von der Statorraumzylinderwand kreisringförmig in den Statorsichterraum (12) hineinragende Abdeckplatte (17) mit zentraler Öffnung ausgebildet ist.

21. Luftwirbelmühle nach einem der Ansprüche 16 bis 20, **dadurch gekennzeichnet, dass** in dem Abscheidezyklon (18) ein motorgetriebenes Radialsichterlamellenrad (21) mit einem Lamellenabstand von 10 bis 30 mm, vorzugsweise 15 bis 25 mm, angeordnet ist.

22. Luftwirbelmühle nach einem der Ansprüche 16 bis 21, **dadurch gekennzeichnet, dass** in der Produktrückführleitung (25) unterhalb des Abscheidezyklons (18) eine Zellenradschleuse (24) angeordnet ist.

23. Luftwirbelmühle nach einem der Ansprüche 15 bis 22, **dadurch gekennzeichnet, dass** die Rotorschleuderteller (4) mit einer Umfangsgeschwindigkeit von 100 bis 150 m/s, insbesondere 120 bis 130 m/s, rotierbar sind.

24. Luftwirbelmühle nach einem der Ansprüche 15 bis 23, **dadurch gekennzeichnet, dass** die Mahlplatten aus Keramik bestehen oder mit Keramik oder einer abrasionsfesten Legierung beschichtet sind.

25. Luftwirbelmühle nach einem der Ansprüche 15 bis 24, **dadurch gekennzeichnet, dass** eine Rückführleitung (34) in ihrem Einmündungsbereich in den Innenraum des Statorzylinders (2) eine Transportschnecke (36) aufweist.

26. Luftwirbelmühle nach einem der Ansprüche 15 bis 25, **dadurch gekennzeichnet, dass** in den Innenraum des Statorzylinders (2) eine Coatierungsmittelzuführleitung (39) einmündet.

27. Luftwirbelmühle nach einem der Ansprüche 15 bis 26, **dadurch gekennzeichnet, dass** im Statorinnenraum des Statorzylinders (2) oberhalb des Fingersichters (8), insbesondere oberhalb der ringförmigen Abdeckplatte (17), ein Ventilatorrad (33) angeordnet ist.

28. Verwendung einer Luftwirbelmühle nach einem der Ansprüche 15 bis 27 in einem Verfahren nach einem der Ansprüche 1 bis 14.

## Claims

1. Method for the production of a finely particulate, dust-like or pulverulent substance by milling and/or disagglomeration of a particulate, especially granular, and/or agglomerated material and/or by mill-drying of a moist, preferably finely particulate, material, especially a filter cake, **characterised in that** the milling and/or disagglomeration and/or mill-drying takes place in an air vortex mill (1) the stator sifter chamber (12) of which is acted upon by additional supply air, especially compressed air, during the milling and/or disagglomeration and/or mill-drying.

2. Method according to claim 1, **characterised in that** the finely particulate, dust-like or pulverulent substance is an inorganic or organic pigment and the particulate material is a pigment pre-product.

3. Method according to claim 1 or 2, **characterised in that** the finely particulate, dust-like or pulverulent substance is a titanium dioxide pigment or the particulate material is a titanium dioxide pigment pre-product.

4. Method according to any one of the preceding claims, **characterised in that** the particulate material is a titanium dioxide crude pigment produced by the sulphate process or the chloride process.

5. Method according to any one of the preceding claims, **characterised in that** the finely particulate, dust-like or pulverulent substance is an after-treated titanium dioxide pigment.

6. Method according to any one of the preceding claims, **characterised in that** the moist material is a pigment suspension, a pigment filter cake and/or a pigment pre-product.

7. Method according to any one of the preceding claims, **characterised in that** the moist material comprises titanium hydrate or a mixture containing titanium hydrate, especially for the production of catalysts, or is a titanium dioxide suspension or a titanium dioxide filter cake.

8. Method according to any one of the preceding claims for the production of titanium dioxide pigment by the sulphate process, **characterised in that** the calcination stage of the titanium dioxide pigment material or a filtration stage of the titanium dioxide pigment material, especially following the hydrolysis stage, is followed by a milling and/or disagglomeration treatment step (44) of the titanium dioxide pigment material, which step (44) comprises comminution of the titanium dioxide pigment material in the air vortex mill (1) the stator sifter chamber (12) of which is acted upon by additional supply air, especially compressed air, during the milling and/or disagglomeration process.

9. Method according to any one of the preceding claims, **characterised in that** supply air, preferably compressed air, especially at a pressure of from 1 to 4 bar, is supplied to the stator sifter chamber (12) via air inlets (13) arranged circumferentially and radially in or on a stator cylinder wall, and especially is blown into the stator sifter chamber (12).

10. Method according to any one of the preceding claims, **characterised in that** the milling and/or disagglomeration or the milling and/or disagglomeration treatment step (44, 48) comprises roller mill milling (48) followed, preferably directly, by air vortex mill milling (44).

11. Method according to any one of the preceding claims, **characterised in that** the milling and/or disagglomeration or the milling and/or disagglomeration treatment step (44) follows, preferably directly, a coating process (47) of the titanium dioxide pigment material or forms part of the coating process.

12. Method according to any one of the preceding claims, **characterised in that** the milling and/or disagglomeration or the milling and/or disagglomeration treatment step (44) is carried out in an after-treatment process of the titanium dioxide pigment material.

13. Method according to any one of the preceding claims, **characterised in that** the milling and/or disagglomeration or the milling and/or disagglomeration treatment step (44) is carried out between silo storage (46) of the titanium dioxide pigment material, which follows calcination (45), and a subsequent suspension and/or after-treatment step (51, 52) of the titanium dioxide pigment material or the packaging operation (50) of the titanium dioxide pigment.

14. Method according to any one of the preceding claims, **characterised in that** the method is carried out in an air vortex mill according to any one of claims 15 to 27.

15. Air vortex mill (1) comprising a stator cylinder (2) having arranged therein rotor spinning plates (4) disposed coaxially one above another on a shaft (3) rotatable at high speed, which rotor spinning plates (4) each form milling stages and are preferably in the form of spinning discs (5) with milling plates (6) arranged peripherally therebetween,
with a finger sifter (8) arranged on the rotatable shaft (3) at a distance above the rotor spinning plates (4) to form a stator sifter chamber (12),
and with a main air supply (26, 29), which is preferably arranged centrally and close to the shaft at the bottom end,
and with a product feed line (32) and a top-end product and air outlet (19) above the finger sifter (8),
**characterised in that** the stator cylinder (2) has air inlets (13) arranged at the level of the stator sifter chamber (12) and distributed over the circumference of the stator cylinder wall, to which air inlets (13) supply air, especially compressed air, flowing radially towards the stator sifter chamber (12), may be admitted in the operating state of the air vortex mill (1).

16. Air vortex mill according to claim 15, **characterised in that** there is arranged in the product and air outlet (19) a separating cyclone (18), preferably having a built-in, especially motor-driven, radial sifter (21) which communicates with a product return connection (25) to convey product back to the interior of the stator cylinder (2).

17. Air vortex mill according to claim 15 or 16, **characterised in that** the product return inlet (15) of a circular cross-section product return line (16) communicating with the interior of the stator cylinder (2) is arranged in the stator sifter chamber (12).

18. Air vortex mill according to any one of claims 15 to 17, **characterised in that** the finger sifter (8) has a gap (10) between each of its fingers (9), with a spacing between the fingers (9) of from 3 to 8 mm at the outer end of the fingers (9).

19. Air vortex mill according to any one of claims 15 to 18, **characterised in that** the finger sifter (8) has a cover plate (11) placed thereon in its centre on the side facing the spinning plates (4).

20. Air vortex mill according to any one of claims 15 to 19, **characterised in that** a cover plate (17) having a central opening and projecting in the shape of a circular ring into the stator sifter chamber (12) from the stator chamber cylinder wall is formed above the finger sifter (8).

21. Air vortex mill according to any one of claims 16 to 20, **characterised in that** a motor-driven radial sifter fin wheel (21) having a distance between fins of from 10 to 30 mm, preferably from 15 to 25 mm, is arranged in the separating cyclone (18).

22. Air vortex mill according to any one of claims 16 to 21, **characterised in that,** in the product return line (25), a cellular wheel sluice (24) is arranged beneath the separating cyclone (18).

23. Air vortex mill according to any one of claims 15 to 22, **characterised in that** the rotor spinning plates (4) are rotatable at a circumferential speed of from 100 to 150 m/s, especially from 120 to 130 m/s.

24. Air vortex mill according to any one of claims 15 to 23, **characterised in that** the milling plates consist of ceramic material or are coated with ceramic material or with an abrasion-proof alloy.

25. Air vortex mill according to any one of claims 15 to 24, **characterised in that** a return line (34) has a transport screw (36) in its inlet region into the interior of the stator cylinder (2).

26. Air vortex mill according to any one of claims 15 to 25, **characterised in that** a coating agent feed line (39) discharges into the interior of the stator cylinder (2).

27. Air vortex mill according to any one of claims 15 to 26, **characterised in that,** in the stator interior of the stator cylinder (2), a fan wheel (33) is arranged above the finger sifter (8), especially above the ring-shaped cover plate (17).

28. Use of an air vortex mill according to any one of claims 15 to 27 in a method according to any one of claims 1 to 14.

## Revendications

1. Procédé de fabrication d'une substance finement divisée, sous forme de poussière ou de poudre, par broyage et/ou désagglomération d'un matériau particulaire, en particulier granulaire, et/ou aggloméré et/ou par séchage-broyage d'un matériau humide, de préférence finement divisé, en particulier un gâteau de filtre, **caractérisé en ce que**
le broyage et/ou la désagglomération et/ou le séchage-broyage se fait ou se font dans un broyeur à tourbillon d'air (1) dont le stator a un espace séparateur (12) qui est alimenté, pendant le broyage et/ou la désagglomération et/ou le séchage-broyage, par un apport d'air supplémentaire, en particulier de l'air comprimé.

2. Procédé selon la revendication 1, **caractérisé en ce que** la substance finement divisée, sous forme de poussière ou de poudre, est un pigment inorganique ou organique et le matériau particulaire est un précurseur de pigment.

3. Procédé selon la revendication 1 ou 2, **caractérisé en ce que** la substance finement divisée, sous forme de poussière ou de poudre, est un pigment de dioxyde de titane et le matériau particulaire est un précurseur de pigment de dioxyde de titane.

4. Procédé selon l'une quelconque des revendications précédentes, **caractérisé en ce que** le matériau particulaire est un pigment brut de dioxyde de titane fabriqué selon le procédé au sulfate ou au chlorure.

5. Procédé selon l'une quelconque des revendications précédentes, **caractérisé en ce que** la substance finement divisée, sous forme de poussière ou de poudre, est un pigment de dioxyde de titane retraité.

6. Procédé selon l'une quelconque des revendications précédentes, **caractérisé en ce que** le matériau humide est une suspension de pigment, un gâteau de filtre de pigment et/ou un précurseur de pigment.

7. Procédé selon l'une quelconque des revendications précédentes, **caractérisé en ce que** le matériau humide comprend du titane hydraté ou un mélange contenant du titane hydraté, en particulier pour fabriquer des catalyseurs, ou une suspension de dioxyde de titane ou un gâteau de filtre de dioxyde de titane.

8. Procédé selon l'une quelconque des revendications précédentes pour fabriquer du pigment de dioxyde de titane selon le procédé au sulfate, **caractérisé en ce que** l'étape de calcination du matériau à base de pigment de dioxyde de titane ou une étape de filtration du matériau à base de pigment de dioxyde de titane, en particulier à la suite de l'étape d'hydrolyse, est suivie d'une étape de traitement par broyage et/ou désagglomération (44) du matériau à base de pigment de dioxyde de titane, qui comprend le broyage du matériau à base de pigment de dioxyde de titane dans le broyeur à tourbillon d'air (1) dont le stator a un espace séparateur (12) qui est alimenté, pendant l'opération de broyage et/ou de désagglomération, par un apport d'air supplémentaire, en particulier de l'air comprimé.

9. Procédé selon l'une quelconque des revendications précédentes, **caractérisé en ce que** de l'air d'appoint est acheminé à l'espace séparateur (12) de stator via des entrées d'air (13) agencées sur la périphérie radialement dans ou sur une paroi cylindrique du stator, de préférence de l'air comprimé, mieux encore à une pression de 1 à 4 bars, en particulier insufflé dans l'espace séparateur (12) du stator.

10. Procédé selon l'une quelconque des revendications précédentes, **caractérisé en ce que** le broyage et/ou la désagglomération ou l'étape de broyage et/ou de désagglomération (44, 48) comprend ou comprennent un broyage (48) dans un broyeur à cylindres suivi, de préférence directement d'un broyage ultérieur (44) dans un broyeur à tourbillon d'air.

11. Procédé selon l'une quelconque des revendications précédentes, **caractérisé en ce que** le broyage et/ou la désagglomération ou l'étape de broyage et/ou de désagglomération (44) suit ou suivent, de préférence directement, une opération de couchage/revêtement (47) du matériau à base de pigment de dioxyde de titane ou fait partie de l'opération de couchage/revêtement.

12. Procédé selon l'une quelconque des revendications précédentes, **caractérisé en ce que** le broyage et/ou la désagglomération ou l'étape de broyage et/ou de désagglomération (44) s'effectue(nt) dans un procédé de retraitement du matériau à base de pigment de dioxyde de titane.

13. Procédé selon l'une quelconque des revendications précédentes, **caractérisé en ce que** le broyage et/ou la désagglomération ou l'étape de broyage et/ou de désagglomération (44) s'effectue(nt) entre un approvisionnement en silo (46) en matériau à base de pigment de dioxyde de titane suivant la calcination (45) et une étape suivante de mise en suspension et/ou de retraitement (51, 52) du matériau à base de pigment de dioxyde de titane ou l'opération de conditionnement (50) du pigment de dioxyde de titane.

14. Procédé selon l'une quelconque des revendications précédentes, **caractérisé en ce que** l'on effectue le procédé dans un broyeur à tourbillon d'air selon l'une quelconque des revendications 15 à 27.

15. Broyeur à tourbillon d'air (1) comprenant un cylindre de stator (2) avec des plateaux centrifuges de rotor (4) qui y sont agencés coaxialement l'un au-dessus de l'autre sur un axe (3) pouvant tourner à grande vitesse, formant respectivement des paliers de broyage, de préférence sous la forme de disques centrifuges (5) avec des plaques de broyage (6) agencées entre elles en périphérie,
un séparateur à doigts (8) agencé sur l'axe de rotation (3), formant un espace séparateur de stator (12) avec un espacement au-dessus des plateaux centrifuges de rotor (4) et une amenée d'air principale (26, 29) de préférence centrale, proche de l'axe et située en position inférieure,
ainsi qu'avec une amenée de produit (32) et une évacuation de produit et d'air (19) en position supérieure au-dessus du séparateur à doigts (8), **caractérisé en ce que**
le cylindre de stator (2) présente à hauteur de l'espace séparateur de stator (12) des entrées d'air (13) réparties sur la périphérie de la paroi du cylindre de stator, qui peuvent être alimentées, en état de service du broyeur à tourbillon d'air (1), par de l'air d'appoint s'écoulant radialement avec l'espace séparateur de stator (12), en particulier de l'air comprimé.

16. Broyeur à tourbillon d'air selon la revendication 15, **caractérisé en ce qu'**on agence dans l'évacuation de produit et d'air (19) un cyclone séparateur (18), de préférence avec un séparateur radial (21) intégré, en particulier entraîné par un moteur, séparateur qui est en communication de recyclage de produit (25) avec l'espace interne du cylindre de stator (2) via une conduite.

17. Broyeur à tourbillon d'air selon la revendication 15 ou 16, **caractérisé en ce qu'**on aménage dans l'espace séparateur de stator (12) l'orifice d'entrée de recyclage de produit (15) d'une conduite de recyclage de produit (16) circulaire en section transversale en communication avec l'espace interne du cylindre de stator (2).

18. Broyeur à tourbillon d'air selon l'une quelconque des revendications 15 à 17, **caractérisé en ce que** le séparateur à doigts (8) présente entre ses doigts (9), respectivement, une fente (10) avec un espacement entre les doigts (9) de 3 à 8 mm à l'extrémité extérieure des doigts (9).

19. Broyeur à tourbillon d'air selon l'une quelconque des revendications 15 à 18, **caractérisé en ce que** le séparateur à doigts (8) présente, sur le côté tourné vers les plateaux centrifuges (4), en son centre, une tôle de recouvrement (11) appliquée par-dessus.

20. Broyeur à tourbillon d'air selon l'une quelconque des revendications 15 à 19, **caractérisé en ce qu'**il y a au-dessus du séparateur à doigts (8) une plaque de recouvrement (17) dépassant en forme d'anneau circulaire de la paroi cylindrique de l'espace de stator dans l'espace du séparateur de stator (12) avec une ouverture centrale.

21. Broyeur à tourbillon d'air selon l'une quelconque des revendications 16 à 20, **caractérisé en ce qu'**une roue à lamelles radiales (21) du séparateur entraînée par un moteur est agencée dans le cyclone de séparation (18), avec un espacement des lamelles de 10 à 30 mm, de préférence de 15 à 25 mm.

22. Broyeur à tourbillon d'air selon l'une quelconque des revendications 16 à 21, **caractérisé en ce qu'**une écluse à roue cellulaire (24) est agencée dans la conduite de recyclage de produit (25) en dessous du cyclone de séparation (18).

23. Broyeur à tourbillon d'air selon l'une quelconque des revendications 15 à 22**, caractérisé en ce que** les plateaux centrifuges de rotor (4) peuvent tourner à une vitesse périphérique de 100 à 150 m/s, en particulier de 120 à 130 m/s.

24. Broyeur à tourbillon d'air selon l'une quelconque des revendications 15 à 23, **caractérisé en ce que** les plaques de broyage sont constituées de céramique ou sont revêtues de céramique ou d'un alliage résistant à l'abrasion.

25. Broyeur à tourbillon d'air selon l'une quelconque des revendications 15 à 24, **caractérisé en ce qu'**une conduite de recyclage (34) présente, dans sa zone d'entrée dans l'espace interne du cylindre de stator (2), une vis sans fin de transport (36).

26. Broyeur à tourbillon d'air selon l'une quelconque des revendications 15 à 25, **caractérisé en ce qu'**une conduite d'amenée d'agent d'enduction (39) débouche dans l'espace interne du cylindre de stator (2).

27. Broyeur à tourbillon d'air selon l'une quelconque des revendications 15 à 26, **caractérisé en ce qu'**une roue de ventilateur (33) est agencée dans l'espace interne de stator du cylindre de stator (2) au-dessus du séparateur à doigts (8), en particulier au-dessus de la plaque de recouvrement annulaire (17).

28. Utilisation d'un broyeur à tourbillon d'air selon l'une quelconque des revendications 15 à 27 dans un procédé selon l'une quelconque des revendications 1 à 14.
